# EUROPÄISCHE PATENTANMELDUNG

(11) **EP 0 581 069 A1**
(43) Veröffentlichungstag der Anmeldung: **02.02.1994**
(21) Anmeldenummer: 93110869.0
(22) Anmeldetag: 07.07.1993
(51) Int. Cl.: B65G 13/06

(54) **Rollenantriebseinheit**

(30) Priorität: 27.07.1992 DE 4224818
(71) Anmelder: Telair International Cargo Systems GmbH, D-83734 Hausham (DE)
(72) Erfinder: Sundseth, Jarl, D-83727 Schliersee (DE)
(74) Vertreter: Bohnenberger, Johannes, Dr.

(57) **Zusammenfassung**

Es sind Rollenantriebseinheiten bekannt, die eine drehbare Antriebsrolle (10) mit einem Außenmantel (32), ein Planetengetriebe in der Antriebsrolle (10) umfassend ein Sonnenrad (11), ein Hohlrad (30) und einen Planetenträger (20) mit daran gelagerten Planetenrädern (28) umfassen. Die Antriebsrolle (10) ist an einem Rahmen (1, 1') um eine, zur Drehachse des Außenmantels (32) exzentrische Achse schwenkbar zwischen einer Ruhestellung und einer Antriebsstellung gelagert. Ein Elektromotor (40) ist zum Antrieb des Sonnenrades (11) vorgesehen. Die bekannte Rollenantriebseinheit ist kompliziert aufgebaut, schwer und relativ betriebsunsicher.

Es wird vorgeschlagen, das Hohlrad (30) auf dem Planetenträger (20) drehbar zu lagern, wobei dieser gleichzeitig den Außenmantel (32) bildet; den Elektromotor (40) außerhalb der Antriebsrolle (10) zusammen mit einem Getriebezug (43 - 48) am Rahmen (1, 1') zu lagern, den Planetenträger (20) mit endseitigen, zur Drehachse des Außenmantels (32) exzentrischen Achsstummeln (21, 22) zum schwenkbaren Lager (35, 35') am Rahmen (1, 1') auszustatten, und den Getriebezug (43 - 48) mit einer Ausgangswelle (48) mit einem endseitigen Ausgangsritzel (47) auszustatten, die durch eine konzentrische Bohrung (36) in einem der Achsstummel (21) derart geführt ist, daß das Ausgangsritzel (47) das Sonnenrad (11) treibt.

## Beschreibung

Die Erfindung betrifft eine Rollenantriebseinheit mit einer drehbaren Antriebsrolle, mit einem Außenmantel, mit einem Planetengetriebe in der Antriebsrolle, das ein Sonnenrad, einen Planetenträger mit daran gelagerten Planetenrädern und ein Hohlrad umfaßt, welches auf dem Planetenträger drehbar gelagert ist und den Außenmantel bildet, wobei der Planetenträger an einem Rahmen um eine, zur Drehachse des Außenmantels exzentrische Achse zwischen einer Ruhestellung und einer Antriebsstellung schwenkbar gelagert ist, und mit einem Elektromotor des Sonnenrades.

Derartige Rollenantriebseinheiten werden beispielsweise zum Transport von Frachtbehältern verwendet, die auf Rollenförderbahnen aufgesetzt sind. Solche Frachtbehälter können Frachtcontainer oder Frachtpaletten sein, wobei ein bevorzugtes Anwendungsgebiet der hier gezeigten Rollenantriebseinheit Frachtladesysteme im Luftfrachtverkehr sind, bei denen die Container in den Laderaum eines Flugzeuges hineingefahren und dort verstaut werden. Die Rollenantriebseinheit ist demzufolge im Flugzeug selbst installiert.

Beim Einschalten derartiger Rollenantriebseinheiten werden die dazugehörigen Rollen hochgeschwenkt und zwar derart, daß sie sich an den Boden eines über ihnen befindlichen Frachtcontainers pressen. Durch diesen Reibschluß kann das Drehmoment der Antriebsrollen auf den Boden des Frachtcontainers übertragen werden und die Antriebsrollen befördern diesen somit weiter.

Aufgrund des Einsatzgebietes tritt nun eine Vielzahl von Problemen bei der Konstruktion derartiger Rollenantriebseinheiten auf. Zum einen muß nämlich eine möglichst hohe Anpreßkraft zwischen der Antriebsrolle und dem Boden des Containers erzeugt werden, andererseits soll die Anpreßkraft vom Drehmoment des Motors "abgezweigt" werden, so daß keine gesonderten Mittel zum Hochheben der Antriebsrolle notwendig sind. Hierbei muß die Rollenantriebseinheit kleinbauend und von geringem Gewicht sein. Da eine Vielzahl von derartigen Rollenantriebseinheiten gleichzeitig in einer Förderbahn Verwendung findet, muß ihre Zuverlässigkeit besonders hoch sein. Der Ausfall einer einzigen Rollenantriebseinheit kann zu einer Störung im Ladebetrieb führen.

Eine Rollenantriebseinheit der eingangs genannten Art ist zum Beispiel aus der EP 0440 859 A1 bekannt. Diese bekannte Anordnung ist jedoch sehr kompliziert aufgebaut und kann nur mit einem relativ kleinen Elektromotor ausgestattet werden, da dieser zusammen mit sämtlichen Getriebeeinheiten in der Antriebsrolle sitzt und diese bei einem sehr großen Elektromotor entweder in ihrem Durchmesser oder aber in ihrer axialen Länge unzulässig groß wird.

Der Erfindung liegt die Aufgabe zugrunde, eine Rollenantriebseinheit der eingangs genannten Art dahingehend weiterzubilden, daß ohne wesentlich erhöhten Konstruktionsaufwand eine erhöhte Zuverlässigkeit bei verbesserten Traktionseigenschaften erzielbar ist.

Diese Aufgabe wird durch die im Kennzeichen des Patentanspruches 1 angegebenen Merkmale gelöst.

Dadurch, daß der Elektromotor nicht innerhalb der Antriebsrolle, sondern außerhalb derselben in an sich bekannter Weise (DE 40 33 762 A1) angeordnet ist, wird der Durchmesser der Antriebsrolle nicht übermäßig groß. Dadurch aber, daß in der Antriebsrolle ein Getriebe vorgesehen ist, kann der Getriebezug zwischen Elektromotor und Antriebsrolle sehr einfach (z. B. als Zahnriemen) ausgebildet werden, so daß geringe Getriebeverluste auftreten. Dadurch wiederum, daß das in der Antriebsrolle vorgesehene Getriebe als Planetengetriebe ausgebildet ist, bei welchem der Planetenträger exzentrisch zur Drehachse des Rollenmantels gelagert ist, wird eine äußerst hohe Stabilität erreicht. Während nämlich bei den herkömmlichen Rollenantriebseinheiten dieser Art sowohl die Verschwenkbewegung der Antriebsrolle als auch deren kontinuierliche Drehung über die Antriebswelle übertragen werden, muß die Antriebswelle sehr stark ausgebildet sein. Dies ist beim Erfindungsgegenstand nun nicht mehr der Fall.

Bei einer bevorzugten Ausführungsform der Erfindung ist das Sonnenrad mit einem Antriebshohlzahnrad fest verbunden, das mit dem Ausgangsritzel des Getriebezugs im Rahmen kämmt. Dadurch wird nicht nur die Exzentrizität der Anordnung gewährleistet, vielmehr kann man dadurch auch eine erste Übersetzungsstufe mit einem hohen Übersetzungsverhältnis herstellen.

Vorzugsweise umfaßt der Getriebezug - wie eingangs angedeutet - einen Zahnriemen, wodurch ein sehr hoher Wirkungsgrad sichergestellt werden kann, der denjenigen der bisher bekannten Rollenantriebseinheiten mit außerhalb der Antriebsrolle liegendem Elektromotor bei weitem übertrifft.

Vorzugsweise ist der Planetenträger als Hohlkörper ausgebildet und weist einen im wesentlichen zylindrischen Außenmantel mit Öffnungen auf, durch welche die Planetenräder über den Außenmantel hervorstehend ragen. Eine derartige Anordnung führt zu einer sehr hohen Stabilität auch dann, wenn relativ geringe Materialstärken des Außenmantels vorgesehen werden. Hierbei ist der Außenmantel vorzugsweise an seinen Enden mit scheibenförmigen Endplatten verbunden und durch diese abgeschlossen, wobei die Achsstummel von den Endplatten nach außen ragen. Auch dies führt zu einer erhöhten Stabilität der Anordnung, wobei gleichzeitig auch eine konstruktiv sehr einfache Ausbildung des Antriebsrollen-Inneren bewerkstelligt werden kann. Dies führt wiederum zu einer erhöhten Standfestigkeit.

Die Achsstummel sind hierbei vorzugsweise mit den jeweiligen Endplatten einstückig ausgebildet, was die Kontruktion vereinfacht und die Stabilität erhöht.

Eine der Endplatten wird vorzugsweise mit dem Außenmantel einstückig ausgebildet, so daß der Zusammenbau der Anordnung besonders einfach wird.

Vorzugsweise weist der Planetenträger einen in seinen Außenmantel drehfest eingesetzten Innenkörper auf, in welchem die Planetenräder gelagert sind. Dadurch kann der Außenmantel des Planetenträgers relativ einfach ausgebildet bzw. hergestellt werden.

Vorzugsweise ist wirkungsmäßig zwischen dem Sonnenrad und dem Planetenträger eine einstellbare Bremseinrichtung vorgesehen, wie sie auch bei den bekannten Rollenantriebseinheiten Verwendung findet, um die Antriebsrolle hochzuheben. Wenn hierbei gleichzeitig der Außenmantel an seinen Enden mit scheibenförmigen Endplatten ausgestattet und durch diese abgeschlossen ist, so ist es von Vorteil, wenn eine der Endplatten über eine Gewindeverbindung derart in den Außenmantel einschraubbar ist, daß abhängig vom Einschrauben (Einschraubtiefe) die Bremseinrichtung einstellbar ist. Somit wird kein gesondertes Einstellorgan benötigt.

Vorzugsweise ist die Drehrichtung der Antriebsrolle umgekehrt zur Schwenkrichtung beim Verschwenken zwischen der Ruhestellung und der Antriebsstellung. Dadurch tritt eine Klemmwirkung zwischen dem Außenmantel der Antriebsrolle und dem zu fördernden Gegenstand auf, so daß das auf den zu fördernden Gegenstand wirkende Antriebsmoment (Traktionskraft) gleichzeitig ein festeres Anpressen der Antriebsrolle an den zu fördernden Gegenstand sicherstellt. Dies ist an sich bekannt und wird insbesondere in der EP 0 391 175 A2 näher erläutert. Im Zusammenhang mit der Aufteilung der notwendigen Untersetzung in ein erstes, am Rahmen liegendes und ein zweites, in der Antriebsrolle befindliches Getriebe liegt hierin aber ein weiterer, überraschender Vorteil. Dadurch nämlich, daß mit einer relativ hohen Drehzahl zwischen dem rahmenseitigen Getriebezug und der Antriebsrolle das Drehmoment übertragen wird, kann nur ein relativ geringes Drehmoment zum Anheben der Antriebsrolle mittels der Bremseinrichtung erzeugt werden. Wenn nun die Relativdrehrichtung der Antriebsrolle gleich der Schwenkrichtung wäre, so würde dieses geringe Schwenkmoment nicht ausreichen, um einen sicheren Eingriff zwischen der Antriebsrolle und dem zu fördernden Gegenstand zu gewährleisten. Da aber bei der besonderen gewählten Drehrichtung die eingangs genannte Klemmwirkung auftritt, genügt dieses geringe Schwenkmoment, um den ersten Kontakt zwischen Antriebsrolle und zu förderndem Gegenstand sicherzustellen, wobei dann die Anpreßkraft durch die Klemmwirkung sichergestellt wird.

Bei einer bevorzugten Ausführungsform der Erfindung, welche diesen Effekt benutzt, weist der Außenmantel großflächige Reibbelagsabschnitte und über diesen hervorragende kleinerflächige Reibkörper auf, die derart angebracht und mit geringerer Steifigkeit ausgebildet sind, daß beim Verschwenken der Antriebsrolle von der Ruhestellung in die Arbeitsstellung zuerst die kleinerflächigen Reibkörper mit einem zu fördernden Gegenstand in Kontakt gelangen, und diese dann im weiteren Verlauf des Verschwenkens und damit steigenden Anpreßkräften zwischen Antriebsrolle und zu förderndem Gegenstand verschoben oder verformt werden, bis sie mit den großflächigen Reibbelagsabschnitten bündig verlaufen und diese mit dem zu fördernden Gegenstand in Kontakt gelangen. Dadurch wird die Klemmwirkung erheblich erhöht, so daß bereits sehr geringe Verschwenkmomente ausreichen, um einen schlüssigen Eingriff zwischen Antriebsrolle und zu förderndem Gegenstand zu erreichen. Die kleinerflächigen Reibkörper weisen hierbei vorzugsweise eine höhere Reibungszahl auf, als die großflächigen Reibbelagsabschnitte. Dadurch wird eine sichere Klemmwirkung auch bei geringen Andruckkräften sichergestellt. Die kleinerflächigen Reibkörper können dann auch aus einem weicheren und weniger abriebfesten Material bestehen, da sie ja bei Einsetzen der Klemmwirkung, wenn also der Mantel der Antriebsrolle fest gegen den Boden des zu fördernden Gegenstandes gepreßt wird, bündig mit den großflächigen Reibabschnitten verlaufen, so daß keine große Last auf den kleinerflächigen Reibkörpern liegt.

Die kleinerflächigen Reibkörper werden bei einer bevorzugten Ausführungsform der Erfindung ringförmig ausgebildet und in umlaufenden Nuten im Außenmantel angeordnet.

Vorzugsweise ist der Rahmen als horizontal zweigeteiltes Gehäuse ausgebildet, in welchem der Elektromotor und der Getriebezug im wesentlichen dicht eingeschlossen sind. Durch die horizontal zweigeteilte Ausbildung ergibt sich eine einzige Dichtfläche, so daß in einfacher Weise eine hermetische Versiegelung des Gehäuses erzielbar ist.

Die Achsstummel werden vorzugsweise mit radial vorstehenden Anschlägen versehen, die mit jeweils einer von zwei Gegenanschlagsflächen (an beiden Seiten) am Rahmen zur Begrenzung der Schwenkbewegung von der Ruhestellung in die Arbeitsstellung in Anschlag gelangen. Dadurch ist sichergestellt, daß auch bei leichten zu fördernden Gegenständen die Antriebsrollen keine vollständige (mehr als 360°) Verschwenk-Drehung durchführen können und dabei den zu fördernden Gegenstand periodisch immer wieder hochheben.

Bevorzugte Ausführungsformen der Erfindung sind in den Unteransprüchen beschrieben.

Nachfolgend wird ein bevorzugtes Ausführungsbeispiel anhand von Abbildungen näher erläutert. Hierbei zeigen:
- Fig. 1: einen Horizontal-Schnitt durch eine Ausführungsform der Erfindung,
- Fig. 2: einen Teil-Schnitt entlang der Linie II-II aus Fig. 1,
- Fig. 3: eine Seitenansicht und
- Fig. 4: eine Draufsicht auf die Ausführungsform der Erfindung.

Wie aus den Abbildungen ersichtlich, weist die hier gezeigte Ausführungsform der Erfindung ein unteres Rahmenteil 1 und ein oberes Rahmenteil 1' auf, die durch eine (einzige) durchgehende Dichtfläche voneinander getrennt und mittels hier nicht gezeigter Schraubbolzen aufeinander befestigt sind.

In dem Rahmen 1, 1' ist ein Elektromotor 40 angeordnet, wobei ein Stator 42 des Elektromotors fest in einer entsprechend geformten Ausnehmung des Rahmens eingeklemmt und dort ggf. festgeklebt werden kann. Die im Stator 42 erzeugte Wärme wird über Kühlrippen 2 des Rahmens 1, 1' nach außen abgeleitet. Die Kühlrippen 2 bilden gleichzeitig einen Schutz gegen Einklemmen von Gegenständen bzw. einen Berührschutz (ähnlich den Stufen einer Fahrtreppe).

Ein Rotor 41 des Elektromotors 40 ist über endseitige Lager im Rahmen 1, 1' gelagert. Sein Antriebsritzel 43 ragt in einen Getriebehohlraum 3 im Rahmen 1, 1'.

In dem Getriebehohlraum 3 ist ein Übertragungsrad 44 drehbar gelagert, das ein Zahnrad und eine Zahnriemenscheibe (einstückig) umfaßt. Das Zahnrad kämmt mit dem Antriebsritzel 43 während auf der Riemenscheibe ein Zahnriemen 45 sitzt. Der Zahnriemen 45 läuft über eine Abtriebsriemenscheibe 46 , die auf einer im Rahmen 1, 1' drehbar gelagerten Ausgangswelle 48 festgesetzt ist.

Die Ausgangswelle 48 ragt aus dem Hohlraum 3 hervor und weist an ihrem Ende gegenüber der Abtriebsriemenscheibe 46 ein Ausgangsritzel 47 auf.

Der Rahmen 1, 1' weist an seinem Ende eine U-förmige Einbuchtung auf. In dieser Einbuchtung sitzt eine Antriebsrolle 10.

Die Antriebsrolle 10 umfaßt einen Außenmantel 32 mit Umfangsnuten 33, in welchen Reibringe 34 aus einem elastischen Material mit einem hohen Reibungskoeffizienten angeordnet sind. Der Außenmantel 32 sitzt auf einer Hülse 31, die eine Innenverzahnung zur Bildung eines Hohlrades 30 aufweist.

Die Inneverzahnung des Hohlrades 30 kämmt mit Zähnen von Planetenrädern 28 (in der Abbildung ist nur eines von dreien gezeigt), die auf Lagern 29 gelagert sind. Die Lager 29 wiederum sitzen auf Lagerbolzen 26, welche drei Abschnitte 25, 25' und 25'' eines Innenkörpers miteinander verbinden. Der Innenkörper 25, 25', 25'' ist mittels einer Keilverbindung drehfest in das Innere eines Außenmantels 23 eingesetzt. Der Außenmantel 23 weist Öffnungen 38 auf, durch welche die Planetenräder 28 über die Außenfläche des Außenmantels 23 vorstehen.

Auf dem Außenmantel 23 ist die Hülse 31 drehbar gelagert. Der Spalt zwischen dem Außenmantel 23 und der Hülse 31 ist mittels Dichtungen 4, 4' abgedichtet.

An seinem, der Ausgangswelle 48 zugewandten Ende geht der Außenmantel 23 in eine Endplatte 24 einstückig über. Die Endplatte 24 weist exzentrisch zur Längsachse der Hülse 31 einen im Rahmen 1, 1' mittels eines Schwenklagers 35 gelagerten ersten Achsstummel 21 auf. Der Achsstummel 21 weist eine konzentrische Bohrung 26 auf, durch welche die Ausgangswelle 48 in das Innere der Hülse 31 ragt.

Weiterhin ist in der Hülse 31 eine Lagerplatte 5 drehfest angeordnet, die eine Bohrung aufweist, durch welche die Ausgangswelle 48 geführt ist.

Zwischen (bzw. in) der Lagerplatte 5 und dem Innenkörper 25, 25', 25'' ist ein Sonnenrad 11 drehbar gelagert, das auf seiner, der Ausgangswelle 48 zugewandten Seite ein Antriebs-Hohlzahnrad 12 aufweist, welches mit dem Ausgangsritzel 47 kämmt. An seinem anderen Ende weist das Sonnenrad 11 ein Abtriebsritzel 13 (das eigentliche Sonnenrad) auf, welches mit den Planetenräder 28 kämmt.

Auf der (axialen) Rückfläche des Antriebs-Hohlzahnrades 12 ist eine Bremsfläche 14 ausgebildet, auf welcher eine ringförmige Bremsscheibe 15 sitzt. Die Bremsscheibe 15 wiederum sitzt auf einer Andruckscheibe 16, welche von einer Tellerfeder 17 in Richtung auf die Bremsfläche 14 vorgespannt wird, wobei die Tellerfeder 17 wiederum auf dem Abschnitt 25'' des Innenkörpers gelagert ist.

Gegenüber der (mit der Hülse 31 einstückig ausgebildeten) Endplatte 24 ist eine Endplatte 24' vorgesehen, welche über eine Gewindeverbindung 39 in die Hülse 31 eingeschraubt ist. Je nach dem wie weit man die Endplatte 24' in die Hülse 31 einschraubt, wird der Innenkörper 25, 25', 25'' in Richtung auf die Bremsfläche 14 verschoben, so daß die Tellerfeder 17 gespannt und somit die Bremswirkung zwischen dem Sonnenrad 11 und dem Planetenträger 20 (gebildet aus den Teilen 23 - 29) eingestellt werden kann, wobei diese Bremskraft die Verschwenkbewegung beim Anschalten des Motors von einer unteren Ruhestellung in eine obere Arbeitsstellung bewirkt.

Die Endplatte 24' weist einen zweiten Achsstummel 22 entsprechend dem ersten Achsstummel 21 auf, der ebenfalls eine Bohrung 37 trägt. Durch diese Bohrung 37 ist ein Befestigungsbolzen 27 geführt, der im Abschnitt 25 des Innenkörpers eingeschraubt ist. Nachdem der Innenkörper 25, 25', 25'' axial verschiebbar, aber drehfest in dem Außenmantel 23 sitzt, wird über den Befestigungsbolzen 27 die in den Außenmantel 23 geschraubte Endplatte 24' drehfest gesichert.

Der zweite Achsstummel 22 ist mittels eines zweiten Schwenklagers 35' im Rahmen 1, 1' befestigt.

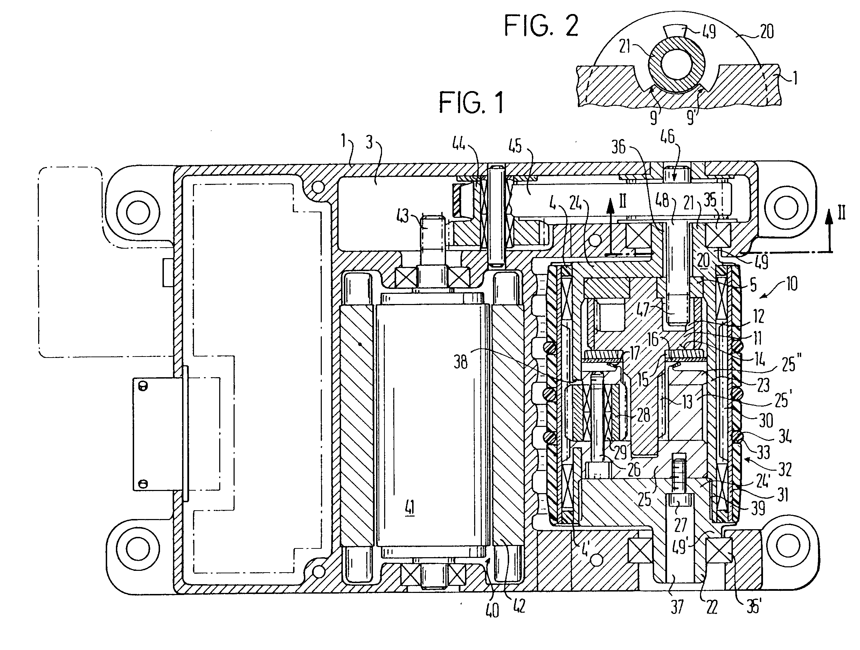

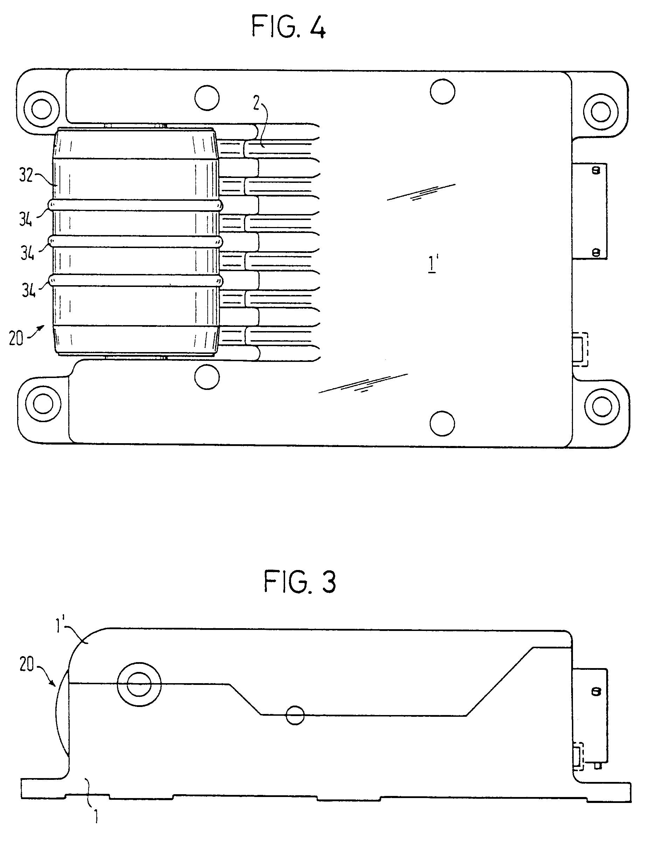

Die beiden Achsstummel 21, 21 ' weisen auf ihren, den Endplatten 24, 24' zugewandten Enden Anschläge 49, 49' auf (siehe Fig. 2), während die untere Rahmenhälfte 1 Gegenanschlagsflächen 9, 9' trägt. Beim Verschwenken der Antriebsrolle 10 wird die Endposition in der Arbeitsstellung (die Rolle ist dann gegenüber der in den Figuren 2 und 3 gezeigten Position nach oben gehoben) durch den Kontakt zwischen den Anschlägen 49, 49' und den Gegenanschlagsflächen 9, 9' definiert.

Dadurch, daß bei der Rollenantriebseinheit die Leistung des Elektromotors 40 über die Ausgangswelle 48 mit relativ hoher Drehzahl aber relativ geringem Drehmoment übertragen wird, ist das auf die Antriebsrolle 10 wirkende Kippmoment (um die vertikale Achse) sehr gering. Die Ausgangswelle 48 kann außerdem relativ schlank ausgebildet sein, da das übertragene Drehmoment - wie gesagt - gering ist. Die Achsstummel 21, 22 können demgegenüber sehr stabil ausgebildet sein, ohne daß dadurch sehr viel Gewicht entstünde, da sie ja nur sehr kurz sind.

Weiterhin kann auch die Hülse 31 sehr dünnwanding ausgebildet werden, ohne daß dadurch die Stabilität der Anordnung leiden würde, nachdem die Hülse 31 einen relativ großen Durchmesser aufweist und dadurch in Achsrichtung der Antriebsrolle 10 sehr steif wird. Schließlich ist auch ein dichter Abschluß aller Getriebeelemente - wie aus den Zeichnungen leicht ersichtlich - ohne großen Aufwand möglich, da lediglich ein Paar Dichtungen 4, 4' zwischen Flächen vorgesehen sein muß, die sich zueinander kontinuierlich drehend bewegen.

### Bezugszeichenliste

- 1, 1': Rahmen
- 2: Kühlrippen
- 3: Getriebehohlraum
- 4, 4': Dichtung
- 5: Lagerplatte
- 9, 9': Gegenanschlagsfläche
- 10: Antriebsrolle
- 11: Sonnenrad
- 12: Antriebs-Hohlzahnrad
- 13: Abtriebsritzel
- 14: Bremsfläche
- 15: Bremsscheibe
- 16: Andruckscheibe
- 17: Tellerfeder
- 20: Planetenträger
- 21: erster Achsstummel
- 22: zweiter Achsstummel
- 23: Außenmantel
- 24, 24': Endplatte
- 25, 25',25'': Innenkörper
- 26: Lagerbolzen
- 27: Befestigungsbolzen
- 28: Planetenrad
- 29: Lager
- 30: Hohlrad
- 31: Hülse
- 32: Außenmantel
- 33: Umfangsnut
- 34: Reibring
- 35, 35': Schwenklager
- 36: Bohrung
- 37: Bohrung
- 38: Öffnung
- 39: Gewindebohrung
- 40: Elektromotor
- 41: Rotor
- 42: Stator
- 43: Antriebsritzel
- 44: Übertragungsrad
- 45: Zahnriemen
- 46: Abtriebsriemenscheibe
- 47: Ausgangsritzel
- 48: Ausgangswelle
- 49, 49': Anschlag

## Patentansprüche

1. Rollenantriebseinheit mit einer drehbaren Antriebsrolle (10) mit einem Außenmantel (32);
mit einem Planetengetriebe in der Antriebsrolle (10) umfassend ein Sonnenrad (11), ein Hohlrad (30) und einen Planetenträger (20) mit daran gelagerten Planetenrädern (28),
wobei die Antriebsrolle (10) an einem Rahmen (1, 1') um eine, zur Drehachse des Außenmantels (32) exzentrische Achse schwenkbar zwischen einer Ruhestellung und einer Antriebsstellung gelagert ist; und
mit einem Elektromotor (40) zum Antrieb der Antriebsrolle (10),
**dadurch gekennzeichnet, daß**
das Hohlrad (30) auf dem Planetenträger (20) drehbar gelagert ist und den Außenmantel (32) bildet;
der Elektromotor (40) außerhalb der Antriebsrolle (10) zusammen mit einem Getriebezug (43 - 48) am Rahmen (1, 1') gelagert ist und über den Getriebezug das Sonnenrad (11) treibt;
der Planetenträger (20) endseitige zur Drehachse des Außenmantels (32) exzentrische Achsstummel (21, 22) zum schwenkbaren Lager (35, 35') am Rahmen (1, 1') aufweist, und daß
der Getriebezug (43 - 48) eine Ausgangswelle (48) mit einem endseitigen Ausgangsritzel (47) aufweist, die durch eine konzentrische Bohrung (36) in einem der Achsstummel (21) derart geführt ist, daß das Ausgangsritzel (47) das Sonnenrad (11) treibt.

2. Rollenantriebseinheit nach Anspruch 1,
dadurch gekennzeichnet,
daß das Sonnenrad (11) mit einem Antriebs-Hohlzahnrad (12) drehfest verbunden ist, das mit dem Ausgangsritzel (47) kämmt.

3. Rollenantriebseinheit nach einem der vorhergehenden Ansprüche,
dadurch gekennzeichnet,
daß der Getriebezug (43 - 48) einen Zahnriemen (45) umfaßt.

4. Rollenantriebseinheit nach einem der vorhergehenden Ansprüche,
dadurch gekennzeichnet,
daß der Planetenträger (20) als Hohlkörper ausgebildet ist und einen im wesentlichen zylindrischen Außenmantel (23) mit Öffnungen (38) aufweist, durch welche die Planetenräder (28) über den Außenmantel (23) hervorstehend ragen.

5. Rollenantriebseinheit nach Anspruch 4,
dadurch gekennzeichnet,
daß der Außenmantel (23) an seinen Enden mit scheibenförmigen Endplatten (24, 24') verbunden und durch diese abgeschlossen ist, von welchen die Achsstummel (21, 22) nach außen ragen.

6. Rollenantriebseinheit nach Anspruch 5,
dadurch gekennzeichnet,
daß die Achsstummel (21, 22) mit den jeweiligen Endplatten (24, 24') einstückig ausgebildet sind.

7. Rollenantriebseinheit nach einem der Ansprüche 5 oder 6,
dadurch gekennzeichnet,
daß eine Endplatte (24) mit dem Außenmantel (23) einstückig ausgebildet ist.

8. Rollenantriebseinheit nach einem der vorhergehenden Ansprüche,
dadurch gekennzeichnet,
daß der Planetenträger (20) einen in den Außenmantel (23) drehfest eingesetzten Innenkörper (25, 25', 25'') aufweist, in welchem die Planetenräder (28) gelagert (29) sind.

9. Rollenantriebseinheit nach einem der vorhergehenden Ansprüche,
dadurch gekennzeichnet,
daß wirkungsmäßig zwischen dem Sonnenrad (11) und dem Planetenträger (20) eine einstellbare Bremseinrichtung (14 - 17) vorgesehen ist.

10. Rollenantriebseinheit nach Anspruch 9,
wobei der Außenmantel (23) an seinen Enden mit scheibenförmigen Endplatten (24, 24') verbunden und durch diese abgeschlossen ist,
dadurch gekennzeichnet,
daß eine der Endplatten (24') über eine Gewindeverbindung (39) derart in den Außenmantel (23) schraubbar ist, daß abhängig vom Einschrauben die Bremseinrichtung (14 - 17) einstellbar ist.

11. Rollenantriebseinheit nach einem der vorhergehenden Ansprüche,
wobei die Drehrichtung der Antriebsrolle (10) umgekehrt ist zur Schwenkrichtung beim Verschwenken zwischen der Ruhestellung und der Antriebsstellung,
dadurch gekennzeichnet,
daß der Außenmantel (32) großflächige Reibbelagsabschnitte (18) und über diese hervorragende kleinflächige Reibkörper (34) aufweist, die derart angebracht und mit geringerer Steifigkeit ausgebildet sind, daß beim Verschwenken der Antriebsrolle (10) von der Ruhestellung in die Arbeitsstellung zuerst die kleinerflächigen Reibkörper (34) mit einem zu fördernden Gegenstand in Kontakt gelangen und diese dann im weiteren Verlauf des Verschwenkens und damit steigenden Anpreßkräften zwischen Antriebsrolle und zu förderndem Gegenstand verschoben oder verformt werden, bis sie mit den großen Reibbelagsabschnitten (18) bündig verlaufen und diese mit dem zu fördernden Gegenstand in Kontakt gelangen.

12. Rollenantriebseinheit nach Anspruch 11,
dadurch gekennzeichnet,
daß die kleinerflächigen Reibkörper (34) eine höhere Reibungszahl aufweisen als die großflächen Reibbelagsabschnitte (18).

13. Rollenantriebseinheit nach einem der Ansprüche 11 oder 12,
dadurch gekennzeichnet,
daß die kleinerflächigen Reibkörper (34) ringförmig ausgebildet und in umlaufenden Nuten (33) im Außenmantel (32) angeordnet sind.

14. Rollenantriebseinheit nach einem der Ansprüche 11 - 13,
dadurch gekennzeichnet,
daß die kleinerflächigen Reibkörper (34) im mittleren Bereich des Außenmantels (32) in dessen Axialrichtung gesehen angeordnet sind.

15. Rollenantriebseinheit nach einem der vorhergehenden Ansprüche,
dadurch gekennzeichnet,
daß der Rahmen (1, 1') als horizontal zweigeteiltes Gehäuse ausgebildet ist, in welchem der Elektromotor (40) und der Getriebezug (43 - 48) im wesentlichen dicht eingeschlossen sind.

16. Rollenantriebseinheit nach einem der vorhergehenden Ansprüche,
dadurch gekennzeichnet,
daß mindestens einer der Achsstummel (21, 22) mit einem radial vorstehenden Anschlag (49, 49') vorgesehen ist, der mit einer von zwei Gegenanschlagsflächen (9, 9') am Rahmen (1, 1') zur Begrenzung der Verschwenkbewegung von der Ruhestellung in die Arbeitsstellung in Anschlag bringbar ist.
